Europäisches Patentamt

European Patent Office

Office européen des brevets

(19)

(11) Publication number: **0 380 694**

**A1**

# EUROPEAN PATENT APPLICATION
## published in accordance with Art. 158(3) EPC

(21) Application number: 89908521.1

(51) Int. Cl.5: **B23H  1/10**

(22) Date of filing: 24.07.89

(86) International application number:
PCT/JP89/00739

(87) International publication number:
WO 90/01389 (22.02.90 90/05)

(30) Priority: 01.08.88 JP 190553/88

(43) Date of publication of application:
08.08.90 Bulletin  90/32

(84) Designated Contracting States:
CH DE FR GB LI

(71) Applicant: FANUC LTD
3580, Shibokusa Aza-Komanba Oshino-mura
Minamitsuru-gun Yamanashi 401-05(JP)

(72) Inventor: TSUTSUMI, Toshiro Fanuc Dai-3
Vira-karamatsu
3527-1, Shibokusa Oshino-mura
Minamitsuru-gun Yamanashi 401-05(JP)

(74) Representative: Billington, Lawrence Emlyn et al
Haseltine Lake & Co Hazlitt House 28,
Southampton Buildings Chancery Lane
London WC2A 1AT(GB)

(54) DEVICE FOR SUPPLYING A MACHINING SOLUTION TO A DISCHARGE MACHINING APPARATUS.

(57) A device for supplying a machining solution to a discharge machining apparatus, the device being capable of automatically adjusting the resistivity of the machining solution to a variably set value. The resistivity of water is detected by a meter relay (90) connected to an electrode (80) provided in a conduit (60) that is communicated with a first tank (11) which stores water as a machining solution. When the resistivity that is detected is greater than an upper limit setpoint value, an electromagnetic valve (21) is opened in response to the output of the meter relay and city water is supplied to the first tank. At the same time, water overflown from the tank is drained through a drain port (14) formed in the peripheral wall of the second tank (12), and the resistivity of water decreases in the first tank. When the resistivity becomes smaller than a lower limit setpoint value, the water is circulated between the first tank and an ion exchanger (100) to increase the resistivity of water.

FIG.1

- 1 -

S P E C I F I C A T I O N

WORKING FLUID SUPPLYING APPARATUS IN
AN ELECTRIC DISCHARGE MACHINE

## Technical Field

The present invention relates to a working fluid supplying apparatus for use in an electric discharge machine, and more particularly, to a working fluid supplying apparatus capable of automatically adjusting the specific resistance of working fluid to a variable predetermined value.

## Background Art

Generally, in a wire cut electric discharge machining operation, working fluid with a specific resistance determined in dependence on the kind of material of a workpiece is used. For example, the specific resistance of working fluid for mold manufacturing workpieces formed of SKD material, SKS material or the like is adjusted to approx. 1 to $2\text{x}10^4$ $\Omega \cdot cm$, whereas the specific resistance of working fluid for workpieces of copper, cemented carbide or the like is adjusted to approx. 3 to $10\text{x}10^4$ $\Omega \cdot cm$. When water is used as the working fluid, the specific resistance of water is increasingly adjusted by use of an ion exchange equipment. On the other hand, when the specific resistance of water which has been once increased should be reduced, water in the working fluid tank is partly discharged and then tap water whose specific resistance is generally approx. 0.5 to $2.0\text{x}10^4$ $\Omega \cdot cm$ is additionally supplied into the tank while the specific resistance of the water in the tank is being measured. In the prior art, all the above operation is manually effected by an operator and it is troublesome. Therefore, the operator may sometimes become lazy about the precise adjustment for attaining a desired specific

- 2 -

resistance.

## Disclosure of the Invention

An object of the present invention is to provide a working fluid supplying apparatus for use in an electric discharge machine, which is capable of automatically adjusting the specific resistance of working fluid to a variable predetermined value.

In order to achieve the above object, a working fluid supplying apparatus of the present invention comprises: a working fluid tank for storing working fluid; supplying means for supplying new working fluid of a predetermined specific resistance into the working fluid tank; detection means for detecting the specific resistance of the working fluid in the working fluid tank; setting means for variably setting a predetermined value of the specific resistance; control means for causing the supplying means to operate when the detected value of the specific resistance is deviated from the predetermined value; and discharging means for automatically discharging excessive working fluid from the working fluid tank to the outside when the working fluid stored in the working fluid tank becomes excessive.

As described above, according to the present invention, since new working fluid is automatically supplied into the working fluid tank when the detected value of the specific resistance of the working fluid is deviated from the predetermined value and at the same time excessive working fluid is automatically discharged from the tank, a desired adjustment of specific resistance can be precisely, rapidly and automatically achieved simply by changing the predetermined value of the specific resistance even in a case where it becomes necessary to change the specific resistance of the working fluid when the type of the workpiece is changed.

### Brief Description of the Drawings

Fig. 1 is a schematic view showing a working fluid supplying apparatus according to one embodiment of the present invention;

Fig. 2 is a cross sectional view of a working fluid tank;

Fig. 3 is a diagram showing the electrical connection within the interior of a specific resistance detector and the electrical connection between the detector and peripheral elements thereof; and

Fig. 4 is a diagram illustrating the operation of a meter relay constituting part of the specific resistance detector.

### Best Mode of Carrying Out the Invention

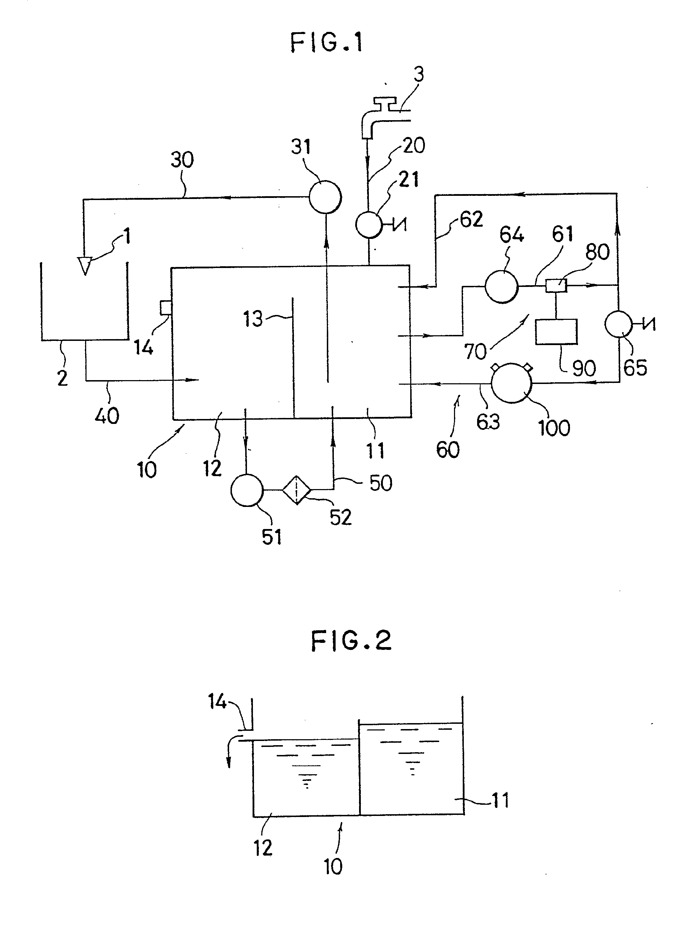

A working fluid supplying apparatus according to one embodiment of the present invention is mounted on a wire cut electric discharge machine including a nozzle 1 and a working fluid bath 2. As shown in Fig. 1, the working fluid supplying apparatus includes a working fluid tank 10 having a first tank section 11 for storing clean water and a second tank section 12 for storing unclean water, and these tank sections 11 and 12 are separated from each other by a partition wall 13. Further, as shown in Fig. 2, a working fluid discharging port 14 is provided in the peripheral wall of the second tank section 12 at a location below the upper edge of the partition wall 13 in the height direction of the tank.

Further, the working fluid supplying apparatus includes first to fifth pipes 20 to 60. One end of the first pipe 20 is coupled to a tap water pipe 3 and the other end thereof is open in the upper position in the height direction inside the first tank section 11. A first electromagnetic switching valve 21 for selectively permitting and inhibiting supply of tap water to the first tank section 11 via the first pipe 20 is disposed in the intermediate portion of the first pipe 20. One end of the second pipe 30 is open in the lower position in the height direction inside the first tank section 11 and the other end thereof is coupled to the nozzle 1 of the electric discharge machine. A first pump 31 for pumping out clean water from the first tank section 11 is disposed in the intermediate portion of the second pipe 30. Both ends of the third pipe 40 are coupled in fluid communication with the bottom portion of the working fluid bath 2 of the electric discharge machine and the second tank section 12, respectively. Both ends of the fourth pipe 50 are communicated with the first and second tank sections 11 and 12. A second pump 51 for pumping out unclean water from the second tank section 12 and a filter 52 for eliminating sludge and the like contained in the unclean water are disposed in the intermediate portion of the pipe 50. The fifth pipe 60 includes an upstream side pipe portion 61 which is coupled at one end in fluid communication with the first tank section 11, and first and second downstream side pipe portions 62 and 63 which are divided from the pipe portion 61. Each of the pipe portions 62 and 63 is communicated at one end with the first tank section 11. A third pump 64 for pumping out water from the first tank section 11 and an electrode 80 for detecting the specific resistance of the pumped-out water are disposed in the middle of the upstream side pipe portion 61 of the fifth pipe 60. The electrode 80 and a meter relay 90 connected thereto constitute a specific resistance detector 70 (refer to

- 5 -

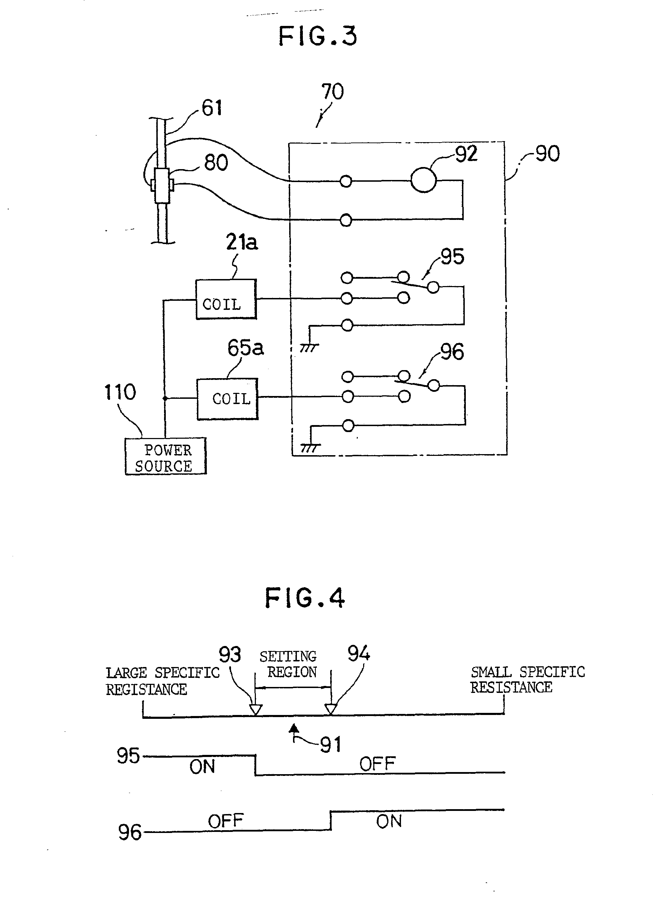

Figs. 1 and 3). Further, a second electromagnetic switching valve 65 for selectively supplying clean water from the upstream side pipe portion 61 of the pipe 60 to the second downstream side pipe portion 63 and an ion exchange equipment 100 positioned on the downstream side of the same valve are disposed in the middle of the second downstream side pipe portion 63 of the fifth pipe 60.

Referring to Figs. 3 and 4, the meter relay 90 includes a meter needle 91 movable on a scale board (not shown), a coil 92 for driving the meter needle, first and second movable members 93 and 94 which are movable on the scale board and by which the upper and lower limits of the specific resistance of working fluid are variably set by an operator, and first and second relays 95 and 96 which are turned on and off in dependence on the positional relation between the meter needle 91 and the respective movable members 93 and 94. That is, the first relay 95 is arranged to be turned on when the meter needle 91 deflects towards the high specific resistance side with respect to the first movable member 93 and to be turned off in the other case, and the second relay 96 is arranged to be turned on when the meter needle 91 deflects towards the low specific resistance side with respect to the second movable member 94 and to be turned off in the other case. Both ends of the coil 92 of the meter relay 90 are connected to both output terminals of the electrode 80 of the specific resistance detector 70. Further, the output sides of the first and second relays 95 and 96 are connected to respective one ends of the coils 21a and 65a of the first and second electromagnetic switching valves 21 and 65, and the respective other ends of these coils are connected to a power source

- 6 -

110.

Now, the operation of the working fluid supplying apparatus with the above construction will be explained.

In the electric discharge machining operation, clean water used as the working fluid stored in the first tank section 11 of the working fluid tank 10 is pumped out by means of the first pump 31 and supplied under high pressure to the nozzle 1 of the electric discharge machine via the second pipe 30. Then, the clean water is sprayed from the nozzle 1 towards the electric discharge machining area, and the resultant unclean water is returned from the working fluid bath 2 of the electric discharge machine to the second tank section 12 via the third pipe 40. The unclean water in the second tank section 12 is pumped out by means of the second pump 51, cleaned by means of the filter 52, and is then returned to the first tank section 11 via the fourth pipe 50. While the working fluid is being circulated as described above, the specific resistance of the working fluid is measured and adjusted as will be described later.

After this, when the type of the workpiece is changed, the specific resistance of the working fluid is changed to a value corresponding to the kind of material of the thus changed workpiece. For example, when the workpiece of copper or cemented carbide is replaced by the workpiece of SK material, it is necessary to significantly reduce the specific resistance of the clean water (working fluid) stored in the first tank section 11. To this end, the operator sets the first and second movable members 93 and 94 to such moving positions that the upper and lower limits defining the predetermined range of the specific resistance of the

- 7 -

working fluid may be made smaller.

At the time point at which setting is made, the meter needle 91 is positioned on the higher specific resistance side with respect to the first movable member 93. As a result, the first relay 95 is turned on so as to permit a drive current to flow in the coil 21a, causing the first electromagnetic switching valve 21 to be opened so that tap water can be supplied from the water pipe 3 to the first tank section 11 via the first pipe 20. Then, water overflowing from the first tank section 11 flows into the second tank section 12 and discharged to the outside of the working fluid tank 10 via the discharging port 14 formed on the peripheral wall of the second tank section 12.

The specific resistance of water is gradually reduced as the tap water is supplied, and the needle 91 of the meter relay 90 moves towards the low specific resistance side. When the needle 91 is set on the low specific resistance side with respect to the setting position of the first movable member 93 of the meter relay 90, that is, when the specific resistance of the water becomes smaller than the upper limit preset value, the first relay 91 of the meter relay 90 is turned off to close the first electromagnetic switching valve 21 so as to interrupt the supply of tap water via the first pipe 20. Then, the operator causes the electric discharge machining operation to start.

In the electric discharge machining operation, the working fluid is circulated from the first tank section 11 via the second pipe 30, second tank section 12 and third pipe 40 and then to the first tank section 11 as described above. At the same time, the specific resistance of water pumped out from the first tank section 11 into the fifth pipe 60 is always measured by means of the specific resistance detector 70. After this, when the needle 91 of the meter relay 90 moves to reach a position on the lower specific resistance side with respect to the setting position of the second movable member 94 of the meter relay 90 as the specific resistance of the water is reduced, that is, when the specific resistance of the water becomes smaller than the lower limit preset value, the second relay 96 of the meter relay 90 is turned on to open the second electromagnetic switching valve 65 so that the water having been subjected to the specific resistance measurement may flow into the second downstream side pipe portion 63 of the fifth pipe 60. Then, the specific resistance of the flow-in water is increased by the ion exchange equipment 100 and the flow-in water is returned to the first tank section 11. When the specific resistance of the water comes into the predetermined range, the second relay 96 of the meter relay 90 is turned off so as to close the second electromagnetic switching valve 65. As a result, the water which has been subjected to the specific resistance measurement is simply returned to the first tank section 11 via the first downstream side pipe portion 62 of the fifth pipe 60, and it is not subjected to the specific resistance increasing operation by the ion exchange equipment 100.

After this, when the specific resistance of the water in the first tank section 11 becomes larger than the upper limit predetermined value, tap water is supplied into this tank section as described above. Further, when it becomes smaller than the predetermined lower limit value, the water in the first tank section 11 is circulated between the same tank section and the ion exchange equipment 100. As a result, the specific resistance of the water is automatically adjusted so as to be kept maintained within the predetermined range.

The present invention is not limited to the above embodiment, and various modifications can be made. For example, in the above embodiment, the present invention is applied to the wire cut electric discharge machine, but it can be applied to another type of electric discharge machine. Further, water is used as the working fluid, but another type of working fluid can be used. In the above embodiment, the specific resistance of the water in the tank is reduced by supplying tap water into the working fluid tank. Alternatively, it is also possible to increase the specific resistance of the working fluid in the tank by supplying new working fluid whose specific resistance is larger than that of the working fluid in the tank. In this case, appropriate means for reducing the specific resistance of the working fluid in the tank may be combined. Further, although a case in which the specific resistance detector is constructed by the electrode and the meter relay has been explained, a combination of an appropriate sensor and an appropriate electric circuit may be also used. In addition, although excessive working fluid in the working fluid tank is discharged via the discharging port formed on the peripheral wall of the tank, it is possible to combine a sensor for detecting the storage level of the working fluid and an electromagnetic switching valve which responds to an sensor output.

# CLAIMS

1. A working fluid supplying apparatus in an electric discharge machine, comprising:

a working fluid tank for storing working fluid;

supplying means for supplying new working fluid of a predetermined specific resistance into said working fluid tank;

detection means for detecting a specific resistance of the working fluid in said working fluid tank;

setting means for variably setting a predetermined value of the specific resistance;

control means for causing said supplying means to operate when the detected value of the specific resistance is deviated from the predetermined value; and

discharging means for automatically discharging excessive working fluid from said working fluid tank to outside thereof when the working fluid stored in said working fluid tank becomes excessive.

2. A working fluid supplying apparatus in an electric discharge machine according to claim 1, wherein the predetermined specific resistance of the new working fluid is smaller than that of the working fluid in said working fluid tank, said working fluid supplying apparatus further including specific resistance adjusting means for increasing the specific resistance of the working fluid stored in said working fluid tank, said control means causing said supplying means to operate when the detected value of the specific resistance is larger than the predetermined value and causing said specific resistance adjusting means to operate when the detected value of the specific resistance is smaller than the predetermined value.

3. A working fluid supplying apparatus in an electric discharge machine according to claim 1, wherein said working fluid tank is arranged to store water as the working fluid, said supplying means including a pipe, which is connected at one end to a tap water pipe and is open at the other end in said working fluid tank, and having a switching valve disposed in the intermediate portion thereof, said control means being operable to cause said switching valve to open when the detected value of the specific resistance is larger than the predetermined value.

4. A working fluid supplying apparatus in an electric discharge machine according to claim 2, wherein said working fluid tank is arranged to store water as the working fluid, said specific resistance adjusting means including a pipe which is communicated at both ends with said working fluid tank and has an intermediate portion thereof provided with a switching valve and an ion exchange equipment arranged on the downstream side of said switching valve, said control means being operable to cause said switching valve to open when the detected value of the specific resistance is smaller than the predetermined value.

5. A working fluid supplying apparatus in an electric discharge machine according to claim 1, wherein said discharging means includes a discharging port provided at a predetermined height on a peripheral wall of said working fluid tank.

# FIG.1

# FIG.2

# FIG.3

# FIG.4

# INTERNATIONAL SEARCH REPORT

International Application No    PCT/JP89/00739

## I. CLASSIFICATION OF SUBJECT MATTER (if several classification symbols apply, indicate all) 6

According to International Patent Classification (IPC) or to both National Classification and IPC

Int. Cl$^4$     B23H1/10

## II. FIELDS SEARCHED

### Minimum Documentation Searched 7

| Classification System | Classification Symbols |
|---|---|
| IPC | B23H1/08-1/10 |

### Documentation Searched other than Minimum Documentation to the Extent that such Documents are Included in the Fields Searched 8

Jitsuyo Shinan Koho     1926 - 1989
Kokai Jitsuyo Shinan Koho     1971 - 1989

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 57-1623 (Mitsubishi Electric Corporation) 6 January 1982 (06. 01. 82) (Family: none) | 1 - 5 |
| Y | JP, A, 58-206324 (Mitsubishi Electric Corporation) 1 December 1983 (01. 12. 83) Page 2, column 3, line 7 to column 4, line 9 (Family: none) | 1 - 5 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| October 9, 1989 (09. 10. 89) | October 23, 1989 (23. 10. 89) |
| International Searching Authority | Signature of Authorized Officer |
| Japanese Patent Office | |

Form PCT/ISA/210 (second sheet) (January 1985)